Europäisches Patentamt

European Patent Office

Office européen des brevets

(11) Veröffentlichungsnummer : **0 120 345**
**B1**

# (12) EUROPÄISCHE PATENTSCHRIFT

(45) Veröffentlichungstag der Patentschrift :
02.03.88

(21) Anmeldenummer : 84102275.9

(22) Anmeldetag : 02.03.84

(51) Int. Cl.⁴ : **H 04 B   1/20**

(54) **Fernbedienungsgerät zur Steuerung verschiedener Funktionen eines oder mehrerer Geräte.**

(30) Priorität : 23.03.83 DE 3310580
14.09.83 DE 3333081

(43) Veröffentlichungstag der Anmeldung :
03.10.84 Patentblatt 84/40

(45) Bekanntmachung des Hinweises auf die Patenterteilung : 02.03.88 Patentblatt 88/09

(84) Benannte Vertragsstaaten :
AT BE CH DE FR GB IT LI LU NL SE

(56) Entgegenhaltungen :
EP-A- 0 002 434
EP-A- 0 129 286
DE-A- 3 142 861
FR-A- 2 415 342
FR-A- 2 423 103
GB-A- 2 038 055
GB-A- 2 054 471
IBM TECHNICAL DISCLOSURE BULLETIN, Band 23, Nr. 7a, Dezember 1980, Seiten 2937-2939, New York, US, J.P. DAHL et al.:"Table selection of key type, data and scan order"
ELEKTRONIK; Nr. 23, November 1981, Seiten 97-100, München, DE, H. MOSER et al.:"Komplette Bausteinfamilie für die PCM-IR-Fernbedienung"

(73) Patentinhaber : TELEFUNKEN Fernseh und Rundfunk GmbH
Göttinger Chaussee 76
D-3000 Hannover 91 (DE)

(72) Erfinder : Platte, Hans-Joachim, Dr.-Ing.
Königsberger Weg 22
D-3005 Hemmingen 4 (DE)
Erfinder : Oberjatzas, Günter, Dipl.-Ing.
Gollstrasse 64
D-3000 Hannover 73 (DE)
Erfinder : Vössing, Walter, Dipl.-Ing.
Am Weingarten 14
D-3015 Wennigsen 1 (DE)

(74) Vertreter : Einsel, Robert, Dipl.-Ing.
TELEFUNKEN Fernseh und Rundfunk GmbH Göttinger Chaussee 76
D-3000 Hannover 91 (DE)

**Beschreibung**

Die Erfindung betrifft ein Fernsteuerungsgerät, insbesondere zur Steuerung von elektrischen und elektronischen Geräten des häuslichen Bereiches, das spezielle Bedienungsregeln für jedes zu steuernde Gerät und die Beschriftungen für hierzu notwendige Bedienungselemente austauschbar in Speicherbauelementen enthält und mit Tasten und zugeordneten elektronischen Anzeigeelementen versehen ist ; die jeweilige Funktion der Tasten und die zugehörige Beschriftung, die dem Benutzer die jeweilige Funktion des zugeordneten Bedienungselementes erkennbar macht, werden von einem Schaltnetzwerk oder Mikroprozessor entsprechend dem Inhalt des Speicherbauelementes gesteuert.

Bekannte Fernsteuerungen sind durch ihre Bauart, ihre Bedienungselementanzahl und ihre fest aufgedruckte oder eingravierte Beschriftung der Bedienungselemente eindeutig und ausschließlich auf die Steuerung von vorweg festgelegten Geräten beschränkt. Bei einer solchen Fernsteuerung mit durch eingeprägte Beschriftung vorweg festgelegten Tastenfunktionen ergeben sich zwangsläufig dann erhebliche Probleme, wenn ein recht komplexes Gerät, wie z. B. ein Videorecorder, oder mehrere unterschiedliche Geräte gesteuert werden sollen. Die Anzahl der notwendigen Bedienungselemente wird dann meist so groß, daß eine handliche Baugröße des Fernbedienungsgerätes nur mit einer Mehrfachbelegung von Tasten erreicht werden kann. Diese Mehrfachbelegung mit entsprechender aufgedruckter oder eingravierter Mehrfachbeschriftung von vielen auf engem Raum untergebrachten Tasten erschweren dem Benutzer jedoch den Umgang mit dem Fernbedienungsgerät erheblich.

Bekannte Fernbedienungsgeräte erfordern außerdem in der Regel die Beobachtung einer Anzeigeeinheit am zu steuernden Gerät während der Benutzung der Fernbedienung. Oft kann der Benutzer nur durch die Beobachtung der Reaktion des zu steuernden Gerätes erkennen, daß ein Tastendruck an der Fernbedienung auch wirklich zur gewünschten Reaktion des zu steuernden Gerätes führt. Gerade für die Eingabe einer Uhrzeit, z. B. zum Stellen eines elektronischen Uhrenbausteines im zu steuernden Gerät oder zur Eingabe von Schaltzeiten, wird häufig eine zyklische Funktionsfortschaltung (d. i. ein durch Tastenbetätigung gesteuertes Vor- und Rückschalten) verwendet, die ohne Kenntnis der Anzeige am zu steuernden Gerät grundsätzlich nicht möglich ist. Die Notwendigkeit der Beobachtung des ferngesteuerten, d. h. zumeist entfernt befindlichen Gerätes widerspricht jedoch dem eigentlichen Sinn einer Fernsteuerung und mindert den Gebrauchsnutzen eines Fernbedienungsgerätes erheblich.

Es ist auch ein Fernbedienungsgerät bekannt (EP-A1 0 002 434), das zur Fernbedienung einer Vielzahl unterschiedlicher Geräte wie z. B. eines Fernsehempfängers, eines Rundfunkempfängers, eines Rechners und einer Raumlichtsteuerung geeignet ist. Um dabei die Zahl der in dem Fernbedienungsgerät vorgesehenen Tasten gering zu halten, ist das Gerät über einen Datenträger wie z. B. einen Codierschlüßel oder Magnetkarten, unterschiedlich programmierbar. Dadurch können je nach Programmierung, vorzugsweise unter Verwendung eines Mikroprozessors, über einen Funktionsvorwähler, einen Funktionsgenerator und eine Sendestufe unterschiedliche Befehle für verschiedene Geräte erzeugt und gesendet werden.

Es ist auch ein Fernbedienungsgerät bekannt (GB-A-2 054 471), bei dem den einzelnen Tasten verschiedene Funktionen zugeordnet sind und jede Taste ein Display aufweist, das sich entsprechend der jeweiligen Funktion ändert. Das Display ist dabei vorzugsweise als alphanumerisches Display ausgebildet.

Derartige Fernbedienungsgeräte kommunizieren bei ihrer Bedienung mit dem jeweils ferngesteuerten Gerät. Dabei ist es erforderlich, daß das Fernbedienungsgerät auf das gesteuerte Gerät ausgerichtet ist, damit das Gerät die Signale von dem Fernbedienungsgerät einwandfrei empfängt. Bei der Befehlsübermittlung zu dem gesteuerten Gerät kann es zu Störungen kommen, wenn z. B. kurzzeitig das Fernbedienungsgerät so geschwenkt wird, daß die Signale vom gesteuerten Gerät nicht mehr einwandfrei empfangen werden können.

Der Erfindung liegt die Aufgabe zugrunde, ein Fernbedienungsgerät so auszubilden, daß Störungen in der Befehlsübertragung zu dem gesteuerten Gerät weitestgehend vermieden werden und/oder das Fernbedienungsgerät auch unabhängig von dem jeweils zu steuernden Gerät betätigt, d. h. programmiert werden kann.

Diese Aufgabe wird durch die im Anspruch beschriebene Erfindung gelöst.

Die Erfindung wird nachstehend anhand eines Ausführungsbeispiels näher erläutert. Es zeigen

Fig. 1 ein erfindungsgemäßes Fernbedienungsgerät mit einem Benutzerhinweise ausgebenden elektronischen Anzeigeelement und mit 12 Tasten mit zugehörigen elektronischen Anzeigeelementen zur « Beschriftung » der Tasten,

Fig. 2 ein erfindungsgemäßes Fernbedienungsgerät ähnlich Fig. 1, bei dem die Tasten durch eine in eine transparente Auflegefolie eingelegte Drahtmatrix gebildet werden,

Fig. 3 das elektrische Prinzipschaltbild des erfindungsgemäßen Fernbedienungsgerätes,

Fig. 4 das erfindungsgemäße Fernbedienungsgerät mit Speicherbausteinen für drei zu steuernde Geräte vor der aktuellen Entscheidung des Benutzers, ein bestimmtes Gerät mit der Fernbedienung anzusprechen,

Fig. 5 das erfindungsgemäße Fernbedienungsgerät entsprechend Fig. 4 nach der Entscheidung des Benutzers, den Videorecorder über das Fernbedienungsgerät anzusprechen,

Fig. 6 das erfindungsgemäße Fernbedienungsgerät entsprechend Fig. 4 und Fig. 5 nach Betätigung der Taste « PLAY ».

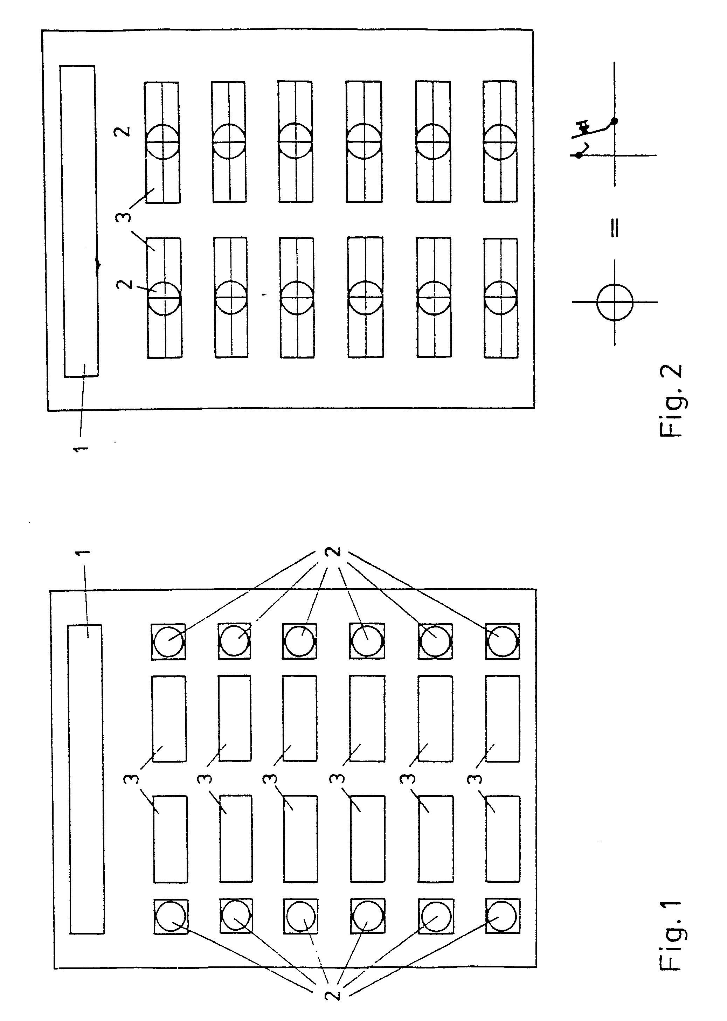

Fig. 1 zeigt die Frontplatte eines erfindungsgemäßen Fernbedienungsgerätes mit einem Informationsdisplay 1 zur Ausgabe von Hinweisen an den Benutzer, zwölf Bedienungstasten 2 und zwölf zugeordneten Beschriftungsdisplays 3, auf denen dem Benutzer die momentane Funktion der zugehörigen Taste durch entsprechende Wörter, Wortabkürzungen und Symbole im Sinne einer Tastenbeschriftung erkennbar gemacht wird. Bei den Bemühungen, die Tastenanzahl möglichst gering zu halten, kommt der Wahl von zwölf Tasten eine besondere Bedeutung insofern zu, als sich mit zwölf Tasten auf einfache Weise sowohl die Eingabe einer Ziffer zwischen 0 und 9 als auch die Eingabe einer Zahl zwischen 1 und 12 realisieren läßt. Die Zehnertastatur wird bekanntlich für jede Rechen- und Zähloperation im dezimalen Zahlensystem benötigt, die bei einem Fernbedienungssystem für den häuslichen Bereich mit jeder Art von Vorrats- oder Verbrauchsanzeige (z. B. Bandlänge) oder Numerierung (z. B. Tonträgernummer in einem Archiv, Titelnummer auf einem Träger oder Nummer einer selbstdefinierten Funktion in einem Ablauf verschiedener Funktionen) auftritt. Die Zwölfertastatur erweist sich als recht vorteilhaft anwendbar für jede Zeiteingabe, die beim Stellen einer Uhr, bei der Eingabe einer Ein- oder Ausschaltzeit in ein zeitgesteuertes Schaltsystem bereits in vielen Geräten des häuslichen Bereiches vorkommt.

Das Informationsdisplay 1 übernimmt in dem erfindungsgemäßen Fernbedienungsgerät u. a. die Funktion des fragenden und Eingaben des Benutzers quittierenden Elementes. Soll z. B. zum Programmieren eines Schalttermins eine Anfangszeit eingegeben werden, so würde auf dem Informationsdisplay 1 z. B. die Frage « Anfangszeit ? » formuliert werden. Gleichzeitig würden die Tasten entsprechend den möglichen sinnvollen Antworten beschriftet werden. Die Antwort des Benutzers erfolgt jeweils durch Auswahl und anschließende Betätigung von nur einer von maximal 12 angebotenen sinnvollen Tasten. Dieses Verfahren der Auswahl einer Taste aus einer geringen Anzahl von Tasten mit jeweils logisch sinnvoller Funktion muß als eine besonders günstige und jedem Benutzer geläufige Art der Bedienung eines technischen Gerätes gelten.

Fig. 2 zeigt eine andere Ausführung eines erfindungsgemäßen Fernbedienungsgerätes. Hier sind die Tasten 3 der Fig. 1 ausgeführt als druckoder berührungssensitive transparente dem jeweiligen Beschriftungsfeld aufgelegte Betätigungselemente. Solche Elemente sind in verschiedenen Ausführungen, z. B. als sich kreuzende dünne Stahldrähte, eingelegt in transparente Folien, bekannt.

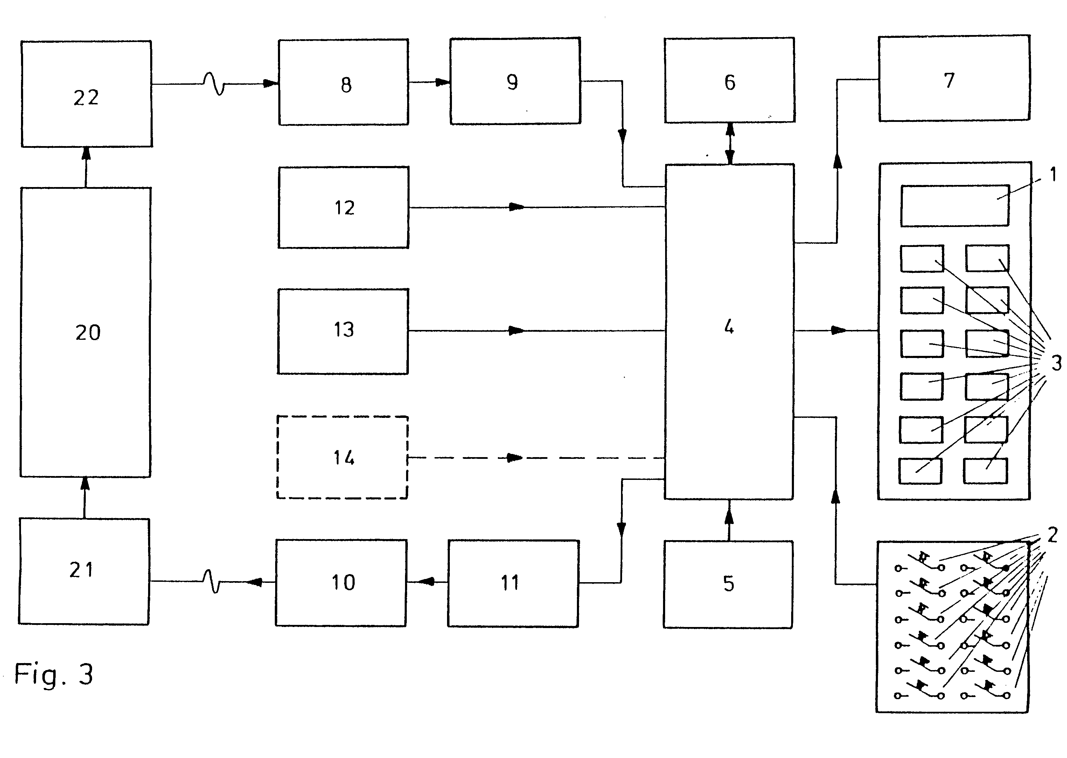

Fig. 3 zeigt das Funktionsblockschaltbild des erfindungsgemäßen Fernbedienungsgerätes. Das Informationsdisplay 1, die Tasten 2 und die elektronischen Anzeigeelemente 3 entsprechen den in Fig. 1 und Fig. 2 beschriebenen Teilen. Diese Teile sind wie alle anderen Funktionsblöcke mit der zentralen Steuereinheit 4 (z. B. einem Mikroprozessor) verbunden. Die zur grundsätzlichen Funktion der zentralen Steuereinheit 4 erforderlichen Anweisungen, z. B. das sog. Betriebssystem des Mikroprozessors, sind in einem Speicherbauelement 5 (z. B. ROM) abgelegt. Die Baugruppe 6 enthält einen Arbeitsspeicher (z. B. RAM) für die zentrale Steuereinheit 4. Eine akustische Ausgabeeinheit 7 ermöglicht eine vom Mikroprozessor gesteuerte Ausgabe akustischer Warn- oder Kommunikationssignale an den Benutzer in Form von Signaltönen oder synthetischer Sprache.

Die von der zentralen Steuereinheit 4 entsprechend der Benutzereingabe generierten Befehle werden vom Quellcoder 11 in für das angesprochene Gerät verständliche Signale (Befehlstelegramme) codiert. Solche Signale werden dann durch den Leitungscoder 10 umgesetzt in zum angesprochenen Gerät (dargestellt in Fig. 3 durch die Funktionsblöcke 20, 21 und 22) übertragbare Signale, z. B. Infrarot-Befehlstelegramme. Der Leitungsdecoder 21 im zu steuernden Gerät setzt solche Befehlstelegramme wie bereits bei bekannten Geräten üblich, in die entsprechende Aktion des Gerätes 20 um. Erfindungsgemäß werden zusätzlich über einen sog. Rückkanal von einem weiteren Leitungscoder 22 Informationen vom zu steuernden Gerät an das Fernbedienungsgerät rücküberträgen. Die entsprechenden Signale werden in einem Leitungsdecoder 8 des erfindungsgemäßen Fernbedienungsgerätes decodiert und in einem nachgeschalteten Quelldecoder 9 für die zentrale Steuereinheit 4 im erfindungsgemäßen Fernbedienungsgerät aufbereitet.

Wie in Fig. 3 dargestellt ist die zentrale Steuereinheit 4 weiterhin mit einer erfindungsgemäß nicht begrenzten Anzahl von Steckplätzen 12, 13 und 14 (dargestellt sind nur drei Stück) verbunden, in die verschiedene Speicherbauelemente austauschbar einzubringen sind. Diese Speicherbauelemente enthalten die für jedes fernzubedienende Gerät typischen Bedienungsregeln, die auf den Displays 1 und 3 auszugebenden Wörter und Symbole und den Fernsteuercode der zu steuernden Geräte in einer für die zentrale Steuereinheit 4 verwertbaren Form. In der hier beschriebenen Ausführungsform sind diese Speicherbauelemente ROM's oder EPROM's.

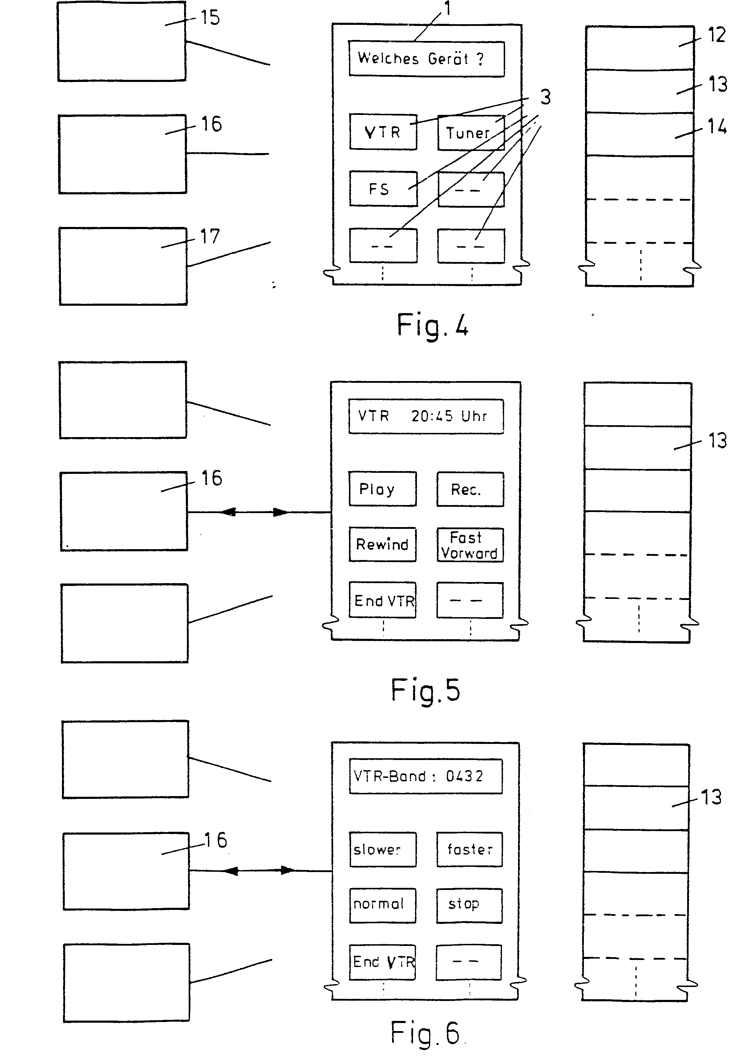

Fig. 4, Fig. 5 und Fig. 6 zeigen in vereinfachter Form das Funktionsprinzip des erfindungsgemäßen Fernbedienungsgerätes an einem Beispiel. Fig. 4 zeigt die Grundsituation : Das erfindungsgemäße Fernbedienungsgerät enthält in den Steckplätzen 12, 13 und 14 die den fernzubedienenden Geräten 15, 16 und 17 zugehörigen Speicherbauelemente. Die zentrale Steuereinheit 4 der Fig. 3 erkennt aus dem Inhalt der Speicherbauelemente, daß in dieser Konfiguration nur die Geräte Videorecorder (« VTR »), Radioempfänger (« Tuner ») und Fernsehempfänger (« FS ») zu bedienen sind. Mit der Frage « Welches Gerät ? » erscheinen auf den Tastendisplays 3 nur die Antwortmöglichkeiten « VTR », « Tuner » und « FS ». Alle anderen den Tasten zugeordneten Displays zeigen Symbole (« Display-Lebenszeichen »), anhand derer der Benutzer erkennt, daß die fehlende Beschriftung nicht auf einen Defekt der ansteuernden Schaltkreise zurückzuführen ist, sondern Teil des erfindungsgemäßen Konzepts ist. — Nach Betätigung der mit « VTR » beschrifteten Taste verzweigt die zentrale Steuereinheit 4 auf das im Steckplatz 13 befindliche Speicherbauelement, d. h. sie gestaltet Tastenbelegung und Tastenfunktion entsprechend den dort gespeicherten Regeln und verwendet für nachfolgend gewünschte befehlsübermittelnde Signale zum zugehörigen Gerät 16 nur die ebenfalls dem Speicherbauelement 13 entnommenen Regeln für die Erzeugung des jeweiligen Befehlstelegramms.

Mit der Anwahl des Videorecorders durch Betätigung der Taste « VTR » in Fig. 4 ändert sich die Beschriftung aller Tasten. Fig. 5 zeigt den dann sich ergebenden Stand mit den Grundfunktionen « Play », « Rec », « Rewind », « Fast Forward » und « End VTR » des Videorecorders. Über den zum Videorecorder 16 aufgebauten bidirektionalen Übertragungskanal werden sowohl die den Videorecorder steuernden Befehlssignale als auch Rückinformationen übertragen. In logischer Konsequenz wird aus dieser Rückinformation u. a. der Inhalt des Bandlängenzählwerkes, der bei bekannten Geräten am fernzubedienenden Gerät angezeigt wird, auf dem Informationsdisplay des erfindungsgemäßen Fernbedienungsgerätes angezeigt. Fig. 6 zeigt die Ansicht aller Displays nach Betätigung der Taste « Play » der Fig. 5.

Man erkennt an dieser kurzen Dialogsequenz, daß die Bedienungslogik in einer Baumstruktur organisiert ist, wie sie auch von anderen Benutzer-führenden Bedienungskonzepten her bekannt ist.

**Patentanspruch**

Fernbedienungsgerät zur Steuerung verschiedener Funktionen eines oder mehrerer Geräte (20), die über einen drahtlosen Übertragungskanal mit dem Fernbedienungsgerät verbunden sind, wobei das Fernbedienungsgerät einen Codesignale erzeugenden und über den Übertragungskanal aussendenden ersten Schaltungsteil (10), einen zweiten Schaltungsteil (4-6, 12-14), der den Tasten (2) nach festgelegten und auf die zu steuernde Funktion zugeschnittenen Regeln verschiedene Belegungen zuordnet, und einen dritten Schaltungsteil (4-6, 12-14) enthält, der die vom Benutzer vorgenommenen Tastenentscheidungen speichert, gekennzeichnet durch folgende Merkmale :

a) das Fernbedienungsgerät enthält Tasten (2), denen Symbole oder Schriftzeichen auf einem elektronischen Anzeigeelement (3) zugeordnet sind, wobei der zweite Schaltungsteil die jeweilige Belegung jeder Taste (2) gleichzeitig durch der Taste (2) zugeordnete Symbole, Wörter oder Wortabkürzungen auf dem elektronischen Anzeigeelement (3) erkennbar macht, und

b) das Fernbedienungsgerät enthält Mittel (4-6, 12-14), die bei solchen Entscheidungen, die erst nach einer Sequenz von Tastenbetätigungen gemäß den festgelegten Regeln logisch abgeschlossen sind, die Codesignalerzeugung und Übertragung zum zu steuernden Gerät (20) erst dann ermöglichen, wenn die Sequenz logisch voneinander abhängiger Tastenbetätigungen vollständig vom Benutzer eingegeben und auf logische Konsistenz mit den festgelegten Regeln geprüft worden ist.

**Claim**

A remote control device for controlling different functions of one or more devices (20), which are connected by means of a wireless transmission channel to the remote control device, in which the remote control device includes a first circuit part (10), which produces code signals and transmits through the transmission channel, a second circuit part (4-6, 12-14), which associates different uses with the keys (2) according to set rules adapted to the function to be controlled, and a third circuit part (4-6, 12-14), which stores the keyed decisions taken by the user, characterised by the following features :

a) the remote control device includes keys (2), with which symbols or letter characters are arranged on an electronic indication element (3), in which the second circuit part makes evident the respective use of each key (2) at the same time on the electronic indication element (3) by means of symbols, words or abbreviations associated with the key (2), and

b) the remote control device includes means (4-6, 12-14) which, in these decisions which are concluded logically only after a sequence of key actuations in accordance with the set rules, only facilitate producing the code signal and transmission to the device (20) to be controlled, when the sequence of logically inter-dependent key actuations is completely input by the user and has been checked for logical consistency with the set rules.

**Revendication**

Boîtier de télécommande, destiné à la commande de différentes fonctions d'un ou de plusieurs appareils (20), reliés par un canal de transmission sans fil au boîtier de télécommande, le boîtier de télécommande comportant un premier circuit (10) qui produit des signaux de code et les émet par le canal de transmission, puis un second circuit (4 à 6, 12 à 14) qui associe aux touches (2) leurs diverses assignations selon des règles établies, adaptées aux fonctions à commander, et un troisième circuit (4 à 6, 12 à 14) qui mémorise les choix que l'utilisateur fait parmi les touches, caractérisé par les faits suivants :

a) le boîtier de télécommande comporte des touches (2), auxquelles sont associés des symboles ou signes visibles sur un élément d'affichage électronique, le second circuit permettant de reconnaître l'assignation respective de chaque touche (2), et ceci simultanément par des symboles, mots ou abréviations de mots associés à la touche, apparaissant sur l'élément d'affichage électronique (3) ;

b) le boîtier de télécommande comporte des moyens (4 à 6, 12 à 14) qui, en cas de décisions prises logiquement seulement après une séquence d'actionnements de touches selon des règles établies, ne rendent possible la production de signaux de code et leur transmission vers l'appareil à commander (20), que lorsque la séquence d'actionnements de touches interdépendants de manière logique a été complètement introduite par l'utilisateur et reconnue conforme, du point de vue logique, aux règles établies.

Fig. 1

Fig. 2

0 120 345

0 120 345

Fig. 3

**Fig. 4**

- 15
- 16
- 17

1 — Welches Gerät ?

3

VTR | Tuner
FS | – –
– – | – –

- 12
- 13
- 14

**Fig. 5**

16

VTR  20:45 Uhr

Play | Rec.
Rewind | Fast Vorward
End VTR | – –

13

**Fig. 6**

16

VTR-Band : 0432

slower | faster
normal | stop
End VTR | – –

13